# EUROPEAN PATENT SPECIFICATION

(11) **EP 3 553 478 B1**
(45) Date of publication and mention of the grant of the patent: **06.01.2021**
(21) Application number: 19166960.5
(22) Date of filing: 03.04.2019
(51) Int. Cl.: G01G 13/02, G01G 17/02, B65B 19/34, B65B 37/08, B65B 37/18

(54) **WEIGHING MACHINE FOR LONG PASTA PACKETS OF 3 KG AND OVER**
WÄGEEINRICHTUNG ZUM ABPACKEN VON LANGEN NUDELN IN PAKETEN VON 3KG UND MEHR
BALANCE POUR ENSACHER DES PÂTES LONGUES EN PAQUETS DE 3KG ET PLUS

(30) Priority: 09.04.2018 IT 201800004298
(43) Date of publication of application: 16.10.2019
(73) Proprietor: CYBORGLINE SA, 6902 Paradiso - Lugano (CH)
(72) Inventor: VEZZANI, Giuseppe, 6900 PARADISO - LUGANO (CH)
(74) Representative: Mittler, Andrea

(56) References cited:
- EP-A1- 0 025 137
- WO-A1-2015/044796
- US-A- 5 377 727

## Description

The present invention relates to a weighing machine for long pasta packets of 3 kg and over.

The pasta industry is now very common all over the world and adapts to specific production needs.

Weighing machines of long pasta inserted in complex systems comprising long pasta production and packaging are known.

WO-2015/044796 to the present Applicant describes a weighing machine for long pasta comprising a loading hopper, dosing means and two weight measurers.

Said dosing means comprise a rotor comprising three recesses able to load and unload long pasta in various steps according to the rotation of the rotor.

The weighing machine described in WO-2015/044796 is adapted to weigh reduced doses of long pasta. Increasing the volume of each recess would result in a too large rotor which would slow down production.

Weighing machines are known, for example in Italian Patent Application 102016000120324, comprising a rotor with a single recess which unloads the pasta onto a weight measurer upon an 180° rotation.

A single recess disadvantageously slows down the production, since it is always required to alternate the loading and unloading steps.

US-5377727 discloses an apparatus for measuring out and filling particulate or granular material, comprising a rotor with a plurality of couples of recesses at 180° from each other.

EP-0025137 discloses a metering device for a controllable introduction of powdery solids, in particular catalyst, in pressure chambers, comprising a rotor with a variable number of depressions, for example three depressions.

It is the object of the present invention to provide a weighing machine capable of weighing pasta doses of 3 kg and over, while maintaining an increased weighing speed.

It is a further object of the present invention that said machine is constructionally similar to the existing ones so as to maintain similar weight measurers, for example.

It is a still further object of the present invention that said machine is affordable.

According to the invention, such and further objects are achieved by a weighing machine as defined in claim 1.

The shape of the rotor advantageously allows reducing the breakages of the long pasta, thus facilitating the work of the blade.

Accordingly, the machine continuously works with weights over 1.5 kg of long pasta poured from each recess onto the weighing machine.

These and other features of the present invention will become more apparent from the following detailed description of a non-limiting, practical exemplary embodiment thereof, disclosed in the following accompanying drawings, in which:

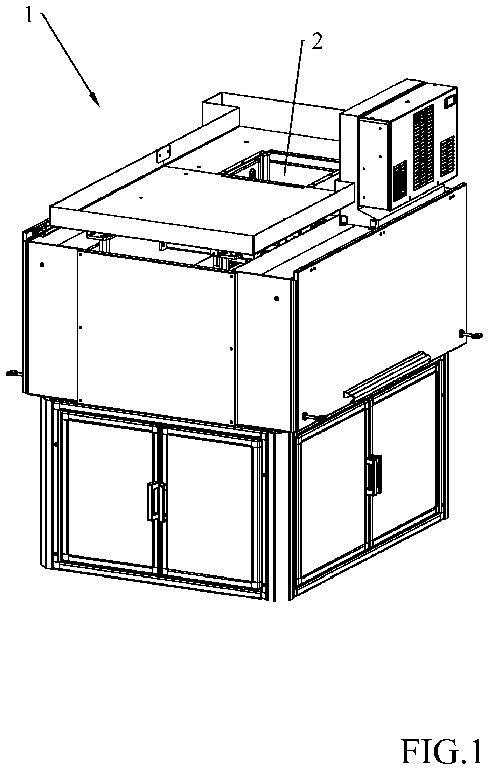

figure 1 shows a perspective view of a weighing machine according to the present invention;

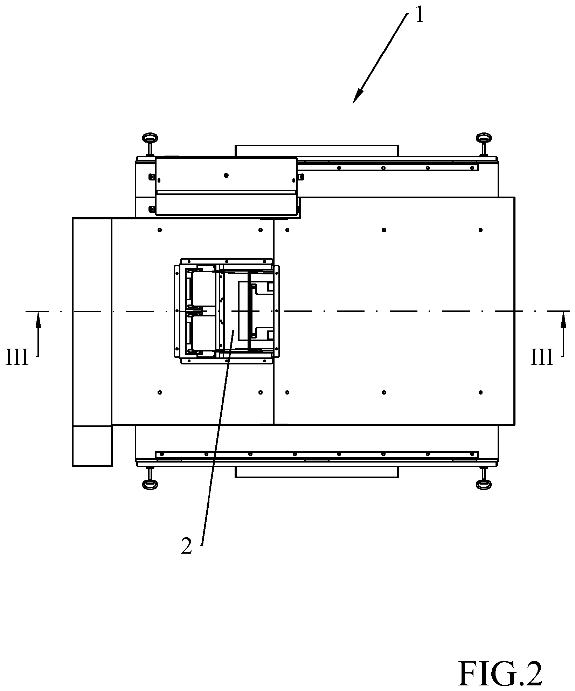

figure 2 shows a top plan view of the weighing machine;
figure 3 shows a sectional view according to line III-III of figure 2;
figure 4 shows a perspective view of a rotor;
figure 5 shows a front view of the rotor.

A weighing machine 1 comprises a channel 2 able to receive long pasta from a production line (not shown).

Said channel 2, which is substantially vertical, conveys the long pasta to a rotor 3 able to dose the long pasta.

Machine 1 further comprises a blade 4 able to move horizontally between a blocking position in which it obstructs the descent of the long pasta into channel 2, and an unblocking position in which the long pasta can descend up to rotor 3.

Two weight measurers 5 able to weigh the long pasta which has accumulated in respective baskets 6 are placed in series below rotor 3.

Each basket 6 is provided with at least one door 7 which is movable between a blocking position of the long pasta (in which the weighing occurs) and an unblocking position in which the long pasta descends to a packaging machine (not shown) able to make long pasta packets of at least 3 kg.

Machine 1 further comprises a lateral, long pasta loading channel 8 if the weight measured is less than the expected one.

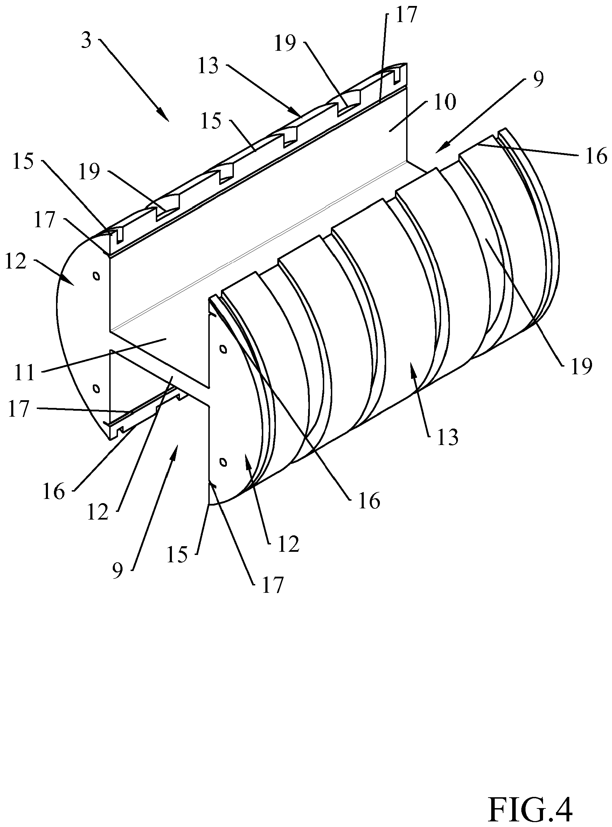

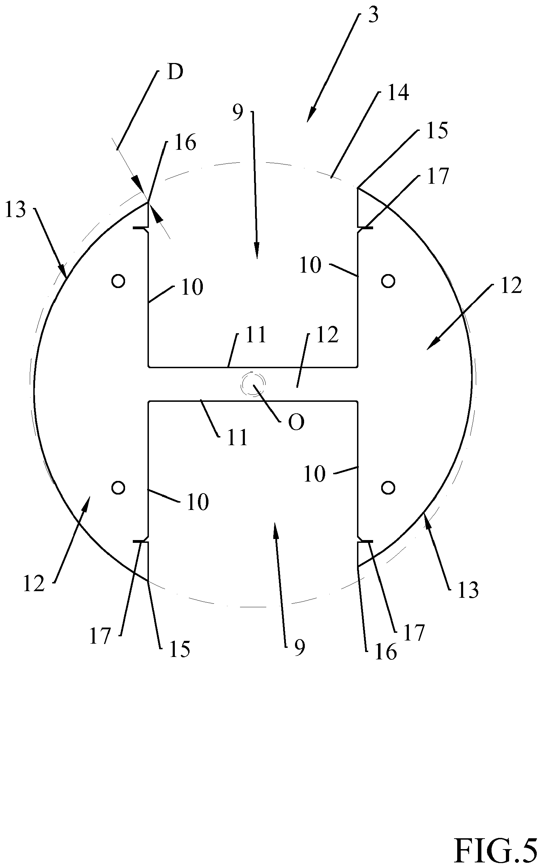

Rotor 3 (figures 4, 5) has two recesses 9 at 180° from each other.

Said recesses 9 are made in a solid cylinder and are laterally delimited by two flat side walls 10 joined by a flat bottom 11.

The flat side walls 10 are perpendicular to the flat bottom 11.

The flat side walls 10 are part of respective lateral elements 12 of rotor 3 joined by a rectilinear portion 18 delimited by said bottoms 11.

Each lateral element 12 comprises an outer surface 13.

In use, rotor 3 describes a rotation path 14 in the shape of a circle (figure 5).

Each outer surface 13 is in the shape of a cylinder portion with grooves 19.

The cylinder portion of each outer surface 13 touches path 14 only along a first free end 15 of one of the two flat side walls 10 of each recess 9.

Path 14 is described by a circumference of center O and radius given by the distance of center O from the first free end 15. The rotation axis of rotor 3 passes through center O.

With the exception of said first free end 15, the cylinder portions are kept inside path 14.

Each recess 9 includes a second free end 16 of a flat side wall 10. Said second free end 16 is inside path 14, in particular at a distance D from said path 14.

Distance D is to be considered along a straight line orthogonal to the outer surface 13 and passing through the second free end 16.

The distance between path 14 and the cylinder portion of each outer surface 13 is null at the first free end 15 and continuously increases up to a maximum value D at the second free end 16.

As will be more apparent below, said continuously varying distance advantageously allows a more effective dosing of the long pasta, in particular when blade 4 is operated to obstruct channel 2.

Each flat side wall 10 has a notch 17 able to accommodate an edge of a long pasta container (not shown) which is separably associable with each recess 9.

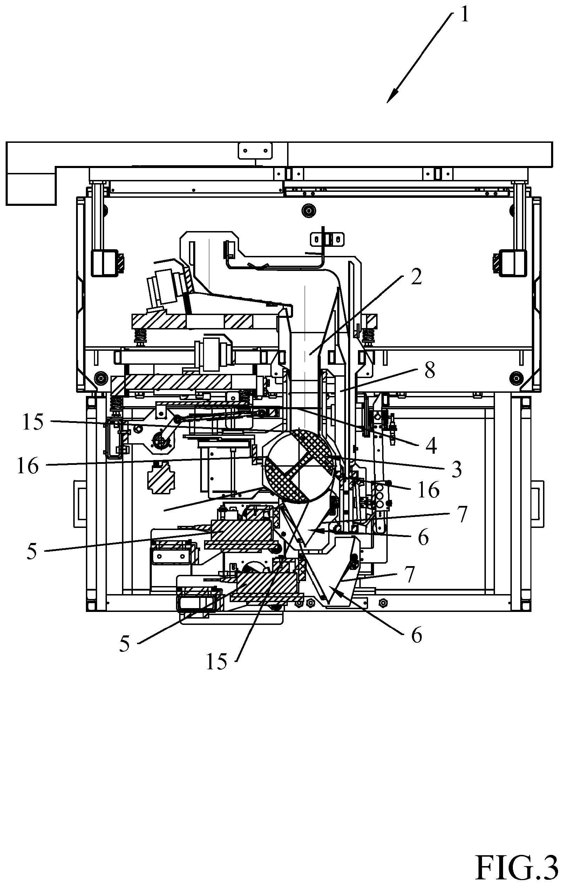

In operation, the long pasta accumulates above rotor 3, which continuously rotates, until the latter is in an angular position in which the outer surface 13 of a lateral element 12 obstructs channel 2, such as for example in the position depicted in figure 3.

Rotor 3 in said figure 3 is mounted to rotate counterclockwise.

The movement of blade 4 to the blocking position of channel 2 defines the amount of long pasta which fills a recess 9.

When blade 4 moves to the blocking position, the long pasta underneath tends to get crushed on the outer surface 13 of a lateral element 12 of the rotating rotor 3.

During the rotation of rotor 3, the space available to the long pasta advantageously tends to increase because, as noted above, the distance between path 14 and the cylinder portion of each outer surface 13 increases during rotation, in particular of the lateral element 12 facing channel 2.

The long pasta slides onto the cylindrical portion of the outer surface 13 of rotor 3 until the second free end 16 of a recess 9 faces channel 2: the long pasta starts filling recess 9.

During the movement of blade 4 from the unblocking position to the blocking position, the space available to the long pasta under blade 4 advantageously increases by virtue of the shape of the cylindrical portion of the outer surface 13 with respect to path 14.

The shape of rotor 3 allows reducing the breakages of the long pasta, thus facilitating the work of blade 4.

Accordingly, machine 1 continuously works with weights over 1.5 kg of long pasta poured from each recess 9 into the baskets 6.

Each recess 9 is able to contain preferably between 1800 cm³ and 2500 cm³ of long pasta, preferably 2100 cm³, i.e. at least 1.5 kg of long pasta.

Path 14 is circular with a diameter preferably between 205 mm and 225 mm, even more preferably of 215 mm.

The radius of curvature of the cylindrical portion of each outer surface preferably is between 100 mm and 105 mm, even more preferably is 103 mm.

Distance D preferably is between 5 and 7 mm, and even more preferably is 6 mm.

It is essential for said radius of curvature to be less than the radius of path 14.

## Claims

1. Weighing machine (1) for making long pasta packets of 3 kg and over, comprising
a channel (2) able to receive long pasta coming from a production line, and able to convey the long pasta to a rotor (3) able to dose the long pasta,
a blade (4) able to move between a blocking position in which it obstructs the descent of the long pasta into the channel (2), and an unblocking position in which the long pasta can descend to the rotor (3),
at least one weight measurer (5) placed under the rotor (3),
**characterized in that**
the rotor (3) has exclusively two recesses (9) at 180° from each other,
wherein each recess (9) is able to contain at least 1.5 kg of long pasta.

2. Weighing machine (1) according to claim 1, **characterized in that**
each recess (9) is delimited by two side walls (10) joined by a bottom (11)
said side walls (10) are part of respective lateral elements (12) of the rotor (3) joined by a rectilinear portion (18) delimited by said bottoms (11),
said rotor (3) describes a rotation path (14) in the shape of a circle,
each lateral element (12) comprises an outer surface (13),
each outer surface (13) remains internal to said path (14) except along a first free end (15) of one of the two side walls (10) of each recess (9),
the distance between the path (14) and each outer surface (13) continuously increasing between said first free end (15) and a second free end (16) of the outer surface (13) of the same lateral element (12).

3. Weighing machine (1) according to claim 2, **characterized in that** each outer surface (13) has the shape of a cylinder portion with grooves (19).

4. Weighing machine (1) according to claim 2 or 3, **characterized in that** the side walls (10) and the bottom (11) are flat, and the side walls (10) are perpendicular to the bottom (11).

5. Weighing machine (1) according to claim 4, **characterized in that** each side wall (10) has a notch (17) able to receive an edge of a long pasta container separably associable with each recess (9).

6. Weighing machine (1) according to any of the preceding claims, **characterized in that** each recess (9) is able to contain between 1800 cm³ and 2500 cm³ of long pasta, preferably 2100 cm³, namely at least 1.5 kg of long pasta.

7. Weighing machine (1) according to any of the claims 2-6, **characterized in that** the path (14) is circular with a diameter between 205 mm and 225 mm, preferably of 215 mm.

8. Weighing machine (1) according to any of the claims 2-7, **characterized in that** the radius of curvature of each outer surface (13) is between 100 mm and 105 mm, preferably 103 mm.

9. Weighing machine (1) according to any of the claims 2-8, **characterized in that** the maximum distance (D) between the outer surface (13) and the path (14) is between 5 mm and 7 mm, preferably of 6 mm.

## Patentansprüche

1. Wiegemaschine (1) zur Herstellung von langen Teigwarenpaketen von 3 kg und mehr, mit einem Kanal (2), der lange Teigwaren, die von einer Produktionslinie kommen, aufnehmen kann und die langen Teigwaren zu einem Rotor (3) befördern kann, der die langen Teigwaren dosieren kann, und mit einem Messer (4), das sich zwischen einer Blockierposition, in der es den Abfluss der langen Teigwaren in den Kanal (2) versperrt, bewegen kann, und einer Freigabeposition, in der die langen Teigwaren auf den Rotor (3) herabfallen können, mindestens ein Gewichtsmessgerät (5), das unter dem Rotor (3) angeordnet ist, **dadurch gekennzeichnet, dass** der Rotor (3) ausschließlich zwei Aussparungen (9) in einem Winkel von 180° zueinander aufweist, wobei jede Aussparung (9) mindestens 1,5 kg lange Teigwaren enthalten kann.

2. Wiegemaschine (1) nach Anspruch 1, **dadurch gekennzeichnet, dass** jede Aussparung (9) durch zwei Seitenwände (10) begrenzt ist, die durch einen Boden (11) verbunden sind, wobei die Seitenwände (10) Teil der jeweiligen Seitenelemente (12) des Rotors (3) sind, die durch einen geradlinigen Abschnitt (18) verbunden sind, der durch die Böden (11) begrenzt ist, wobei der Rotor (3) eine Rotationsbahn (14) in Form eines Kreises beschreibt, jedes Seitenelement (12) eine Außenfläche (13) aufweist, jede Außenfläche (13) innerhalb des Pfades (14) bleibt, außer entlang eines ersten freien Endes (15) einer der beiden Seitenwände (10) jeder Aussparung (9), wobei der Abstand zwischen dem Pfad (14) und jeder Außenfläche (13) zwischen dem ersten freien Ende (15) und einem zweiten freien Ende (16) der Außenfläche (13) desselben Seitenelements (12) kontinuierlich zunimmt.

3. Wiegemaschine (1) nach Anspruch 2, **dadurch gekennzeichnet, dass** jede Außenfläche (13) die Form eines Zylinderabschnitts mit Rillen (19) hat.

4. Wiegemaschine (1) nach Anspruch 2 oder 3, **dadurch gekennzeichnet, dass** die Seitenwände (10) und der Boden (11) flach sind und die Seitenwände (10) senkrecht zum Boden (11) stehen.

5. Wiegemaschine (1) nach Anspruch 4, **dadurch gekennzeichnet, dass** jede Seitenwand (10) eine Aussparung (17) aufweist, die geeignet ist, einen Rand eines Behälters für lange Teigwaren aufzunehmen, der mit jeder Aussparung (9) trennbar verbunden werden kann.

6. Wiegemaschine (1) nach einem der vorhergehenden Ansprüche, **dadurch gekennzeichnet, dass** jede Aussparung (9) zwischen 1800 cm³ und 2500 cm³ lange Teigwaren, vorzugsweise 2100 cm³, d.h. mindestens 1,5 kg lange Teigwaren, aufnehmen kann.

7. Wiegemaschine (1) nach einem der Ansprüche 2-6, **dadurch gekennzeichnet, dass** der Pfad (14) kreisförmig ist mit einem Durchmesser zwischen 205 mm und 225 mm, vorzugsweise von 215 mm.

8. Wiegemaschine (1) nach einem der Ansprüche 2-7, **dadurch gekennzeichnet, dass** der Krümmungsradius jeder Außenfläche (13) zwischen 100 mm und 105 mm, vorzugsweise 103 mm, beträgt.

9. Wiegemaschine (1) nach einem der Ansprüche 2-8, **dadurch gekennzeichnet, dass** der maximale Abstand (D) zwischen der Außenfläche (13) und der Bahn (14) zwischen 5 mm und 7 mm, vorzugsweise 6 mm, beträgt.

## Revendications

1. Balance (1) pour faire des paquets de 3 kg et plus de pâtes longues, comprenant :
un canal (2) pouvant recevoir des pâtes longues provenant d'une ligne de production et pouvant transporter les pâtes longues jusqu'à un rotor (3) pouvant doser les pâtes longues,
une pale (4) pouvant se déplacer entre une position de blocage dans laquelle elle obstrue la descente des pâtes longues dans le canal (2) et une position de déblocage dans laquelle les pâtes longues peuvent descendre jusqu'au rotor (3),
au moins un dispositif de mesure de poids (5) placé sous le rotor (3),
**caractérisée en ce que** :
le rotor (3) a exclusivement deux évidements (9) à 180° l'un de l'autre,
dans laquelle chaque évidement (9) peut contenir au moins 1,5 kg de pâtes longues.

2. Balance (1) selon la revendication 1, **caractérisée en ce que**
chaque évidement (9) est délimité par deux parois latérales (10) assemblées par un fond (11),
lesdites parois latérales (10) font partie d'éléments latéraux (12) respectifs du rotor (3) assemblés par une partie rectiligne (18) délimitée par lesdits fonds (11),
ledit rotor (3) décrit une trajectoire de rotation (14) sous la forme d'un cercle,
chaque élément latéral (12) comprend une surface externe (13),
chaque surface externe (13) reste à l'intérieur de ladite trajectoire (14) excepté le long d'une première extrémité libre (15) de l'une des deux parois latérales (10) de chaque évidement (9),
la distance entre la trajectoire (14) et chaque surface externe (13) augmentant de manière continue entre ladite première extrémité libre (15) et une seconde extrémité libre (16) de la surface externe (13) du même élément latéral (12).

3. Balance (1) selon la revendication 2, **caractérisée en ce que** chaque surface externe (13) a la forme d'une partie de cylindre avec des rainures (19).

4. Balance (1) selon la revendication 2 ou 3, **caractérisée en ce que** les parois latérales (10) et le fond (11) sont plats, et les parois latérales (10) sont perpendiculaires au fond (11).

5. Balance (1) selon la revendication 4, **caractérisée en ce que** chaque paroi latérale (10) a une encoche (17) pouvant recevoir un bord d'un contenant de pâtes longues pouvant être séparément associé avec chaque évidement (9).

6. Balance (1) selon l'une quelconque des revendications précédentes, **caractérisée en ce que** chaque évidement (9) peut contenir entre 1 800 cm³ et 2 500 cm³ de pâtes longues, de préférence 2 100 cm³, c'est-à-dire au moins 1,5 kg de pâtes longues.

7. Balance (1) selon l'une quelconque des revendications 2 à 6, **caractérisée en ce que** la trajectoire (14) est circulaire avec un diamètre compris entre 205 mm et 225 mm, de préférence 215 mm.

8. Balance (1) selon l'une quelconque des revendications 2 à 7, **caractérisée en ce que** le rayon de courbure de chaque surface externe (13) est compris entre 100 mm et 105 mm, de préférence 103 mm.

9. Balance (1) selon l'une quelconque des revendications 2 à 8, **caractérisée en ce que** la distance maximum (D) entre la surface externe (13) et la trajectoire (14) est comprise entre 5 mm et 7 mm, de préférence 6 mm.
